# EUROPÄISCHE PATENTANMELDUNG

(11) **EP 1 541 986 A1**
(43) Veröffentlichungstag der Anmeldung: **15.06.2005**
(21) Anmeldenummer: 04027981.2
(22) Anmeldetag: 25.11.2004
(51) Int. Cl.: G01N 1/38

(54) **Probennahmeeinrichtung und System zur Untersuchung von Probenflüssigkeit**

(30) Priorität: 12.12.2003 DE 10358775
(71) Anmelder: Boehringer Ingelheim microParts GmbH, 44227 Dortmund (DE)
(72) Erfinder: Blankenstein, Gert, Dr., 44139 Dortmund (DE); Willms, Thomas, 44575 Castrop-Rauxel (DE)
(74) Vertreter: Gesthuysen, von Rohr & Eggert

(57) **Zusammenfassung**

Es werden eine Probennahmeeinrichtung und ein System zur Untersuchung von Probenflüssigkeit vorgeschlagen. Eine sehr einfache und schnelle Untersuchung von Probenflüssigkeit wird dadurch ermöglicht, daß die Probennahmeeinrichtung ein Reservoir für Verdünnungsflüssigkeit aufweist und daß aufgenommene Probenflüssigkeit mittels der Verdünnungsflüssigkeit unmittelbar an eine Untersuchungseinrichtung abgebbar ist.

## Beschreibung

Die vorliegende Erfindung betrifft eine Probennahmeeinrichtung zur Aufnahme und Abgabe von Probenflüssigkeit gemäß dem Oberbegriff des Anspruchs 1 sowie ein System zur Untersuchung von Probenflüssigkeit gemäß dem Oberbegriff des Anspruchs 15.

Zur Untersuchung von Probenflüssigkeit, insbesondere Blut, Speichel oder einer sonstigen Flüssigkeit eines menschlichen oder tierischen Körpers, ist es aus der Praxis bekannt, mittels einer Kapillare Probenflüssigkeit, beispielsweise Blut von einem Finger, aufzunehmen und die Kapillare mit der Probenflüssigkeit anschließend in ein Behältnis mit Verdünnungsflüssigkeit einzusetzen, wobei üblicherweise ein Schütteln zum Mischen der Probenflüssigkeit mit der Verdünnungsflüssigkeit bzw. zum Verdünnen erforderlich ist. Anschließend kann dann eine Untersuchung der Probenflüssigkeit erfolgen, wobei aber die verdünnte Probenflüssigkeit in einem zusätzlichen Schritt erst einer Analyseeinrichtung zugeführt werden muß. Die Untersuchung der Probenflüssigkeit ist dementsprechend verhältnismäßig aufwendig und zeitraubend.

Der vorliegenden Erfindung liegt die Aufgabe zugrunde, eine Probennahmeeinrichtung zur Aufnahme und Abgabe von Probenflüssigkeit und ein System zur Untersuchung von Probenflüssigkeit anzugeben, so daß eine Untersuchung von Probenflüssigkeit auf einfache Weise und vorzugsweise sehr schnell durchgeführt werden kann.

Die obige Aufgabe wird durch eine Probennahmeeinrichtung gemäß Anspruch 1 oder ein System gemäß Anspruch 15 gelöst. Vorteilhafte Weiterbildungen sind Gegenstand der Unteransprüche.

Eine grundlegende Idee der vorliegenden Erfindung liegt darin, die Probennahmeeinrichtung mit einem Reservoir für eine Verdünnungsflüssigkeit und/oder Reaktionsflüssigkeit zu versehen, wobei die Probenflüssigkeit und die Verdünnungs- bzw. Reaktionsflüssigkeit nacheinander oder gleichzeitig - insbesondere durch eine einzige Betätigung der Probennahmeeinrichtung - abgebbar sind. Insbesondere wird die Probenflüssigkeit durch die bevorratete Verdünnungs- bzw. Reaktionsflüssigkeit ausgewaschen bzw. ausgespült und bei der Aufnahme in eine Aufnahmekammer gleichzeitig mit der Verdünnungs- bzw. Reaktionsflüssigkeit vermischt bzw. verdünnt. Dies ermöglicht eine sehr einfache Handhabung mit nur einem Schritt oder wenigen Schritten und gestattet eine schnelle Probennahme und anschließende Untersuchung, da ein separater Zwischenschritt des Mischens bzw. Verdünnens entfällt.

Ein weiterer Vorteil der erfindungsgemäßen Lösung liegt darin, daß kein separates Behältnis für die Verdünnungs- bzw. Reaktionsflüssigkeit erforderlich ist. Vielmehr genügt die Probennahmeeinrichtung mit dem integrierten Reservoir für die Verdünnungsflüssigkeit und eine Untersuchungseinrichtung, um ein voll funktionsfähiges, vorzugsweise transportables bzw. tragbares System zur Untersuchung von Probenflüssigkeit zu bilden.

Nachfolgend wird für die weitere Beschreibung und in den Ansprüchen zur Vereinfachung lediglich der Begriff "Verdünnungsflüssigkeit" verwendet. Dies schließt jedoch ein, daß die Flüssigkeit insbesondere auch Reagenzien enthalten kann, die mit Bestandteilen der Probenflüssigkeit reagieren (können). Bei der "Verdünnungsflüssigkeit" handelt es sich also um eine Flüssigkeit, die eine Verdünnung, Pufferung und/oder Reaktion o. dgl. mit der Probenflüssigkeit bewirken kann.

Weitere Vorteile, Merkmale, Eigenschaften und Aspekte der vorliegenden Erfindung ergeben sich aus der folgenden Beschreibung bevorzugter Ausführungsformen anhand der Zeichnung. Es zeigt
- Fig. 1: eine schematische Darstellung einer vorschlagsgemäßen Probennahmeeinrichtung gemäß einer ersten Ausführungsform vor der Aufnahme von Probenflüssigkeit;
- Fig. 2: eine schematische Schnittdarstellung eines vorschlagsgemäßen Systems gemäß einer ersten Ausführungsform, bestehend aus der Probennahmeeinrichtung gemäß Fig. 1 und einer Untersuchungseinrichtung, in die die Probennahmeeinrichtung eingeführt ist;
- Fig. 3: eine schematische Darstellung einer Analyseeinrichtung der Untersuchungseinrichtung gemäß Fig. 2;
- Fig. 4: eine schematische Darstellung eines vorschlagsgemäßen Systems mit einer vorschlagsgemäßen Probennahmeeinrichtung gemäß einer zweiten Ausführungsform;
- Fig. 5: eine schematische Darstellung einer bevorzugten Aufnahmeeinrichtung der Probennahmeeinrichtung gemäß Fig. 1 zur Aufnahme von Probenflüssigkeit;
- Fig. 6: eine schematische Darstellung einer Analyseeinrichtung des Systems gemäß Fig. 4;
- Fig. 7: eine schematische ausschnittsweise Schnittdarstellung einer Analyseeinrichtung gemäß einer dritten Ausführungsform;
- Fig. 8: eine schematische Darstellung einer Analyseeinrichtung gemäß einer vierten Ausführungsform;
- Fig. 9: eine schematische Schnittdarstellung einer Analyseeinrichtung gemäß einer fünften Ausführungsform; und
- Fig. 10: eine Draufsicht der Analyseeinrichtung gemäß Fig. 9.

In den Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

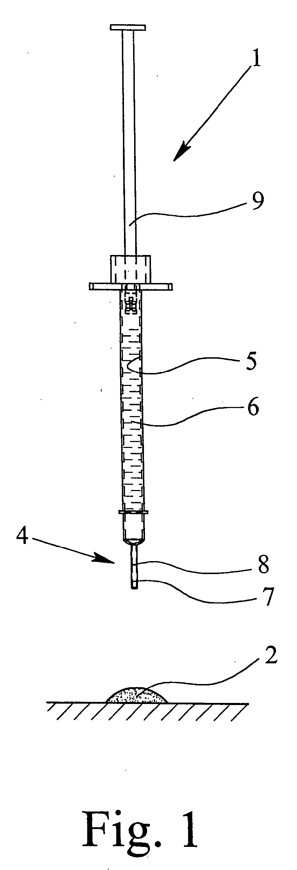

Fig. 1 zeigt in schematischer Darstellung eine erste Ausführungsform einer vorschlagsgemäßen Probennahmeeinrichtung 1 zur Aufnahme von Probenflüssigkeit 2, insbesondere Blut, Speichel oder einer sonstigen Flüssigkeit eines menschlichen oder tierischen Körpers.

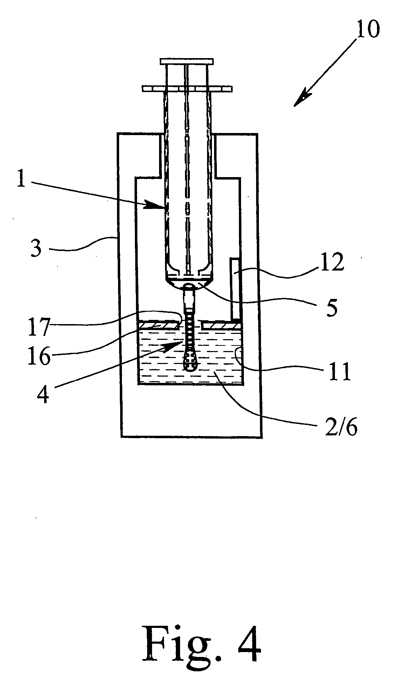

Die Probennahmeeinrichtung 1 ist nur zur temporären Aufnahme - insbesondere einer vorbestimmten Menge - von Probenflüssigkeit 2 vorgesehen und für eine anschließende Abgabe der Probenflüssigkeit 2, insbesondere an eine Untersuchungseinrichtung 3, wie in Fig. 4 dargestellt, ausgebildet.

Wie Fig. 1 zu entnehmen ist, weist die Probennahmeeinrichtung 1 eine Aufnahmeeinrichtung 4 für die Probenflüssigkeit 2 auf. Die Probennahmeeinrichtung 1 weist ferner ein Reservoir 5 für eine Verdünnungsflüssigkeit 6 im genannten Sinne auf und ist derart ausgebildet, daß die von der Probennahmeeinrichtung 1 bzw. deren Aufnahmeeinrichtung 4 aufgenommene Probenflüssigkeit 2 und die Verdünnungsflüssigkeit 6 nacheinander oder gleichzeitig, insbesondere durch eine einzige Betätigung der Probennahmeeinrichtung 1, abgebbar sind. Dazu befindet sich im Ausgangszustand, also vor Probennahme, bereits die Verdünnungsflüssigkeit 6 im Reservoir 5.

Die Aufnahmeeinrichtung 4 ist vorzugsweise unabhängig vom Reservoir 5 mit der Probenflüssigkeit 2 befüllbar. Vorzugsweise ist die Aufnahmeeinrichtung 4 selbsttätig mit der Probenflüssigkeit 2 befüllbar.

Gemäß einer besonders bevorzugten Ausgestaltung weist die Aufnahmeeinrichtung 4 eine Kapillare 7 zur Aufnahme der Probenflüssigkeit 2 auf. Die Kapillare 7 ist vorzugsweise mit einer Endlüftungsöffnung 8 - beispielsweise auf der halben Länge der Kapillare 7 - versehen, deren Querschnitt vorzugsweise geringer als der Querschnitt der Kapillare 7 ist. Die Entlüftungsöffnung 8 zweigt seitlich von der Kapillare 7 ab, stellt also eine seitliche Öffnung bzw. Bohrung durch die Wandung der Kapillare 7 dar. Die Kapillare 7 und die Entlüftungsöffnung 8 sind in Fig. 1 nur schematisch zu erkennen.

Alternativ oder zusätzlich kann die Entlüftungsöffnung 8 auch stirnseitig angeordnet und/oder können mehrere Entlüftungsöffnungen 8 vorgesehen sein.

Zwischen der Aufnahmeeinrichtung 4 und dem Reservoir 5 ist vorzugsweise eine Entlüftung gebildet, insbesondere um die bevorzugte selbsttätige Aufnahme von Probenflüssigkeit 2 zu ermöglichen.

Bei Kontakt mit der Probenflüssigkeit 2 füllt sich beim Darstellungsbeispiel die Kapillare 7 selbsttätig bis zur Höhe der Entlüftungsöffnung 8 mit der Probenflüssigkeit 2.

Anschließend ist die von der Probennahmeeinrichtung 1 bzw. Aufnahmeeinrichtung 4 aufgenommene Probenflüssigkeit 2 mit der oder durch die Verdünnungsflüssigkeit 6 austragbar. Hierzu weist die Probennahmeeinrichtung 1 eine vorzugsweise manuell betätigbare Pumpeinrichtung 9 auf, die beim Darstellungsbeispiel durch einen niederdrückbaren Kolben, Stempel oder dgl. gebildet ist. Insbesondere bildet die Probennahmeeinrichtung 1 mit der Aufnahmeeinrichtung 4, dem Reservoir 5 und der Pumpeinrichtung 9 eine vorzugsweise mobile bzw. tragbare, manuell zu handhabende Baueinheit, vorzugsweise im wesentlichen in einer spritzenförmigen Form.

Vorzugsweise ist die Probennahmeeinrichtung 1 derart ausgebildet, daß die Verdünnungsflüssigkeit 6 auslaufsicher und lagerbar integriert bzw. aufgenommen ist. Der Auslaufschutz - beispielsweise eine Membran oder dergleichen - wird dann durch Betätigung der Pumpeinrichtung 9 - beispielsweise durch den Druck der Verdünnungsflüssigkeit 6 - aufgehoben.

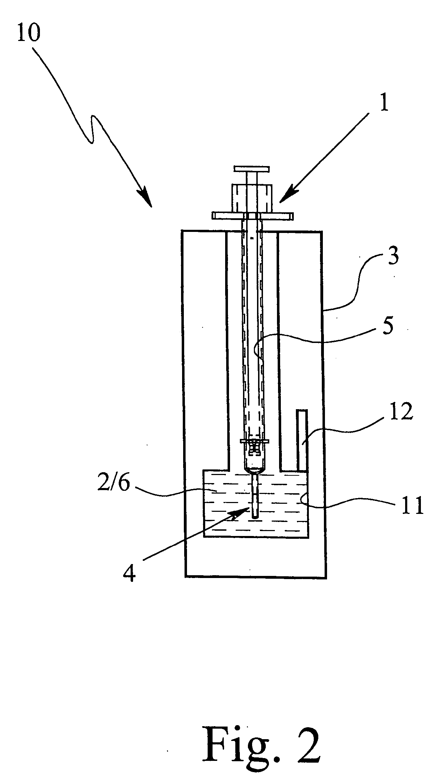

Nach dem Einsetzen der Probennahmeeinrichtung 1 in die Untersuchungseinrichtung 3, wie in Fig. 2 dargestellt, wird die von der Probennahmeeinrichtung 1 aufgenommene Probenflüssigkeit 2 dadurch wieder abgegeben, daß die Aufnahmeeinrichtung 4 mit der Verdünnungsflüssigkeit 6 zur Abgabe der Probenflüssigkeit 2 und der Verdünnungsflüssigkeit 6 durch Betätigung der Pumpeinrichtung 9 gespült wird. So wird die zuvor aufgenommene Probenflüssigkeit 2 ausgewaschen.

Die vorschlagsgemäße Probennahmeeinrichtung 1 und die Untersuchungseinrichtung 3 bilden zusammen ein vorschlagsgemäßes System 10 zur Untersuchung der Probenflüssigkeit 2. Hierauf wird nachfolgend näher eingegangen.

Die Untersuchungseinrichtung 3 weist beim Darstellungsbeispiel eine Aufnahmekammer 11 zur Aufnahme der Probenflüssigkeit 2 und der Verdünnungsflüssigkeit 6 auf. Bei Betätigen der Pumpeinrichtung 9 wird beim Darstellungsbeispiel zunächst in der Kapillare 7 befindliche Probenflüssigkeit 2 durch die nachströmende Verdünnungsflüssigkeit 6 ausgetrieben und in die darunter befindliche, insbesondere das freie Ende der Aufnahmeeinrichtung 4 umgebende Aufnahmekammer 11 ausgegeben. Die nachströmende Verdünnungsflüssigkeit 6 wäscht bzw. spült die Aufnahmeeinrichtung 4, insbesondere deren Kapillare 7, durch. Sofern Verdünnungsflüssigkeit 6 hierbei durch die Lüftungsöffnung 8 austritt, stört dies nicht, da auch diese Verdünnungsflüssigkeit 6 von der entsprechend gestalteten Aufnahmekammer 11 aufgenommen wird.

Die weiter in der Aufnahmekammer 11 nachströmende Verdünnungsflüssigkeit 6 führt zu einer unmittelbaren Mischung und/oder Reaktion mit der Probenflüssigkeit 2 und damit zu der gewünschten und für die nachfolgende Untersuchung erforderlichen Verdünnung und/oder Reaktion der Probenflüssigkeit 2.

Das eingeführte Ende der Aufnahmeeinrichtung 4 ist nach der Arretierung bzw. Festlegung der Probennahmeeinrichtung 1 in der Untersuchungseinrichtung 3 in vertikaler bzw. axialer Richtung vorzugsweise in etwa zentrisch innerhalb der Aufnahmekammer 11 angeordnet. Auf diese Weise trifft die Probenflüssigkeit 2 während des Spül- bzw. Austragvorgangs zunächst auf den Boden der Aufnahmekammer 11 und verwirbelt dort.

Zur Optimierung der Vermischung der Probenflüssigkeit 2 mit der Verdünnungsflüssigkeit 6 kann die Aufnahmekammer 11 eine die Vermischung begünstigende Form - beispielsweise zur Erzeugung von turbulenten Strömungen und Wirbeln - und/oder einen statischen Mischer oder dergleichen, beispielsweise am Boden, aufweisen.

Alternativ kann die Probennahmeeinrichtung 1 auch derart ausgebildet sein, daß die Probenflüssigkeit 2 mit der Verdünnungsflüssigkeit 6 bereits in der Probennahmeeinrichtung 1 mischbar ist. Vorzugsweise ist jedoch die oben beschriebene Mischung erst bei oder nach der Abgabe von der Probennahmeeinrichtung 1 vorgesehen.

Um eine bedarfsweise ausreichende Verdünnung zu ermöglichen, kann das Aufnahmevolumen des Reservoirs 5 für die Verdünnungsflüssigkeit 6 mindestens um den Faktor 2, 5 oder 10, vorzugsweise 100, insbesondere 1000, größer als das Aufnahmevolumen der Aufnahmeeinrichtung 4 für Probenflüssigkeit 2 sein. Eine derartig hohe Verdünnung ist beispielsweise bei der Bestimmung des HbAlc-Werts wichtig. Es gibt jedoch auch Anwendungen, wo das Übertragen von Probenflüssigkeit 2 und/oder das Mischen und ggf. Reagieren der Probenflüssigkeit 2 mit Reagenzien in der Verdünnungsflüssigkeit 6 im Vordergrund stehen; eine Verdünnung also nicht wesentlich ist.

Zur Untersuchung bzw. Analyse der verdünnten bzw. reagierten Probenflüssigkeit 2 weist die Untersuchungseinrichtung 3 eine in Fig. 2 schematisch angedeutete Analyseeinrichtung 12 auf.

Vorzugsweise ist die Untersuchungseinrichtung 3 derart ausgebildet, daß erst bei oder nach Erreichen einer bestimmten Füllmenge, insbesondere Füllhöhe, in der Aufnahmekammer 11 durch die Probenflüssigkeit 2 und die Verdünnungsflüssigkeit 6 und/oder erst nach einer bestimmten Zeit eine Analyse durchführbar ist, insbesondere erst dann der Analyseeinrichtung 12 verdünnte Probenflüssigkeit 2 zuführbar ist. Dies wird vorzugsweise dadurch erreicht, daß die Analyseeinrichtung 12 in einer entsprechenden Höhe relativ zur Aufnahmekammer 11 angeordnet ist, so daß die Analyse beispielsweise erst nach Benetzung gestartet wird, und/oder die Analyseeinrichtung 12 von der Aufnahmekammer 11 durch eine Schwallwand o. dgl., die von der verdünnten Probenflüssigkeit 2 erst überwunden werden muß, getrennt ist. Damit ist sichergestellt, daß nur eine hinreichend verdünnte, also für die Analyse vorbereitete Probe analysiert werden kann.

Die Analyseeinrichtung 12 ist vorzugsweise zur mikrofluidischen Diagnostik ausgebildet. Entsprechend ist die verdünnte Probenflüssigkeit 2 vorzugsweise selbsttätig, insbesondere durch Kapillarkräfte, der Analyseeinrichtung 12 zuführbar und/oder innerhalb dieser für die Analyse förderbar.

Die Analyseeinrichtung 12 weist die für die Diagnostik bzw. Untersuchung erforderlichen Komponenten und/oder Reagenzien auf. Beispielsweise kann die Analyseeinrichtung 12 einen strukturierten Probenträger und/oder einen Reagenzteststreifen aufweisen. Relativ oder zusätzlich kann die Analyseeinrichtung 12 auch ein direkt auf einer Wandung der Untersuchungseinrichtung 3 aufgebrachtes, beispielsweise eingetrocknetes Reagenz oder dergleichen aufweisen bzw. verwenden.

Insbesondere weist die Analyseeinrichtung 12 die für die Analyse der Probenflüssigkeit 2 erforderlichen Reagenzien auf und kann außerdem die für die Durchführung der Analyse notwendigen fluidischen Strukturen, zum Beispiel für das Dosieren und Mischen, enthalten.

Die Analyseeinrichtung 12 ist im einfachsten Fall ein nicht strukturierter Bereich auf einer Wandung, beispielsweise der Untersuchungseinrichtung 3, insbesondere in der Aufnahmekammer 11, auf dem das für die Analyse der Probenflüssigkeit 2 erforderliche Reagenz immobilisiert, insbesondere eingetrocknet ist. Des weiteren kann ein bestimmter Wandungsbereich strukturiert sein, beispielsweise durch Kanäle, Kavitäten und dergleichen.

Die Analyseeinrichtung 12 kann auch ein in die Untersuchungseinrichtung 3 eingebrachter, insbesondere eingesetzter Reagenzienträger, beispielsweise eine nicht strukturierte Folie oder eine mikrostrukturierte Kanalplatte, insbesondere aus Kunststoff, Glas, Silizium, oder ein Filterteststreifen, insbesondere aus Nitrozellulose, Papier, Gewebe oder Filterpapier, ein Lateral-Flow-Teststreifen oder dergleichen sein.

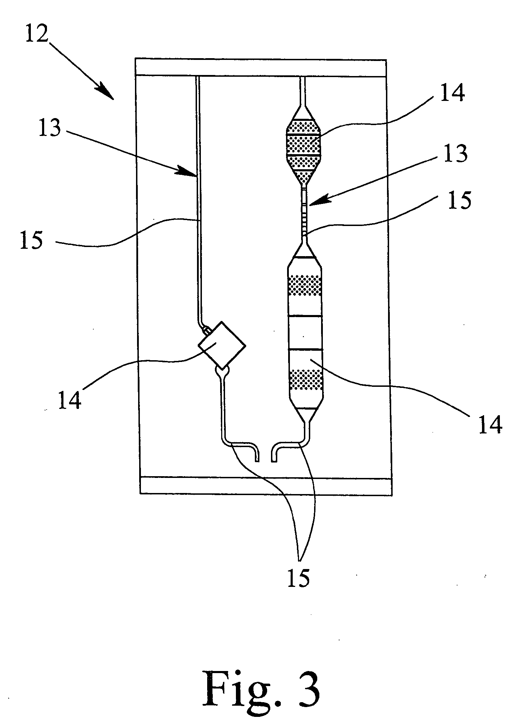

Beim Darstellungsbeispiel gemäß Fig. 3 ist die Analyseeinrichtung 12 insbesondere durch eine sogenannte Miktrotiterplatte oder einen sogenannten Analyse-Chip oder dergleichen gebildet.

Bei der ersten Ausführungsform ist die Analyseeinrichtung 12 vorzugsweise zur Untersuchung von Blut als Probenflüssigkeit 2, vorzugsweise zur Bestimmung eines Blutwerts, insbesondere des sogenannten HbAlc-Werts, ausgebildet. Bei der Bestimmung des HbAlc-Werts handelt es sich insbesondere um einen quantitativen Test, wobei das Verdünnungsverhältnis insbesondere festgelegt ist.

Fig. 3 zeigt beispielhaft einen möglichen Aufbau der Analyseeinrichtung 12. Die Analyseeinrichtung 12 weist hier zwei Reaktionsäste 13 mit Kammern 14 und Kanälen 15 auf. Durch entsprechende Reagenzien in den Kammern 14 und gezielt ablaufende Reaktionen kann dann die gewünschte Untersuchung, insbesondere die Bestimmung des gewünschten Werts oder gewünschten Verhältnisses, erfolgen.

Zur ersten Ausführungsform ist anzumerken, daß die Probennahmeeinrichtung 1 vorzugsweise länglich und/oder zylinderförmig ausgebildet ist, ggf. auch spritzenartig, um eine intuitiv richtige Handhabung zu erleichtern.

Die Untersuchungseinrichtung 3 weist vorzugsweise eine an die Probennahmeeinrichtung 1 angepaßte Ausnehmung bzw. Öffnung auf, so daß die Probennahmeeinrichtung 1 intuitiv richtig in die Untersuchungseinrichtung 3 einsetzbar ist. Vorzugsweise verschließt die eingesetzte Probennahmeeinrichtung 1 die Ausnehmung bzw. Öffnung der Untersuchungseinrichtung 3 zumindest weitgehend, um eine unerwünschte Verunreinigung und damit Fehler bei der Untersuchung vermeiden zu können.

In den Kammern 14 können nach dem Einströmen der (verdünnten) Probenflüssigkeit 2 Messungen, Manipulationen, Untersuchungen oder Reaktionen, beispielsweise zur biologischen, insbesondere mikrobiologischen, oder chemischen Diagnostik, stattfinden, insbesondere mit bzw. durch in den Kammern 14 befindliche, nicht dargestellte Reagenzien oder durch sonstige Einwirkungen. Vorzugsweise werden die Reagenzien vorab in die Kammern 14 eingebracht. Um die Untersuchungen oder Reaktionen vorzugsweise optisch - beispielsweise durch Transmissions-, Fluoreszenz- oder Trübungsmessungen - durchführen bzw. verfolgen zu können, ist die Analyseeinrichtung 12 vorzugsweise aus ausreichend transparentem Material hergestellt oder vorzugsweise zumindest bereichsweise transparent ausgebildet. Alternativ oder zusätzlich können die Messungen oder Untersuchungen jedoch auch elektrisch oder in sonstiger Weise erfolgen.

Das Volumen der Verdünnungsflüssigkeit 6 und der mit der Probennahmeeinrichtung 1 bzw. von der Aufnahmeeinrichtung 4 aufgenommenen bzw. dosierten Probenflüssigkeit 2 ist zusammen so ausgelegt, daß insbesondere erst nach vollständiger Übertragung beider Flüssigkeiten 2, 6 in die Untersuchungseinrichtung 3 eine Füllmenge bzw. Füllhöhe in der Aufnahmekammer 11 erreicht wird, bei der die verdünnte Probenflüssigkeit 2 in Kontakt mit dem unteren Bereich der Analysevorrichtung 12 tritt und diesen benetzen kann. Durch diese Benetzung wird die eigentliche Analyse oder eine sonstige Untersuchung erst gestartet.

Je nach Anwendung kann die Probennahmeeinrichtung 1 auch ein größeres Volumen an Verdünnungsflüssigkeit 6 als unbedingt erforderlich enthalten. Dann ist die Untersuchungseinrichtung 3 vorzugsweise derart ausgebildet, daß bei Erreichen einer bestimmten Füllmenge bzw. Füllhöhe in der Aufnahmekammer 11 die Untersuchung mittels der Analyseeinrichtung 12 erfolgt. Zu diesem Zeitpunkt hat sich dann ein gewisses Verdünnungsverhältnis eingestellt, das in Abhängigkeit von der Genauigkeit der Festlegung des Volumens der von der Aufnahmeeinrichtung 4 aufgenommenen Probenflüssigkeit 2 festgelegt ist.

Im Fall der ersten Ausführungsform ist das Aufnahmevolumen an Probenflüssigkeit 2 durch die Kapillare 7 relativ genau bestimmt, so daß dementsprechend ein gewünschtes Verdünnungsverhältnis bei entsprechender Dimensionierung der Aufnahmekammer 11 und insbesondere Anordnung der Analyseeinrichtung 12 erreicht werden kann.

Evtl. überschießende Verdünnungsflüssigkeit 6 führt dann zu einer weitergehenden Verdünnung, die die Untersuchung bzw. Analyse vorzugsweise nicht mehr maßgeblich beeinflußt. Vielmehr ist die Untersuchungseinrichtung 3 vorzugsweise derart ausgebildet, daß diese überschießende Verdünnungsflüssigkeit 6 zusammen mit der weiter verdünnten Probenflüssigkeit 2 aus der Aufnahmekammer 11 in einen vorzugsweise vorgesehenen Überlaufraum o. dgl. strömen kann. Hierdurch wird vermieden, daß überschießende Flüssigkeiten 2, 6 aus der Untersuchungseinrichtung 3 nach Erreichen der gewünschten Füllmenge bzw. Füllhöhe ausströmen.

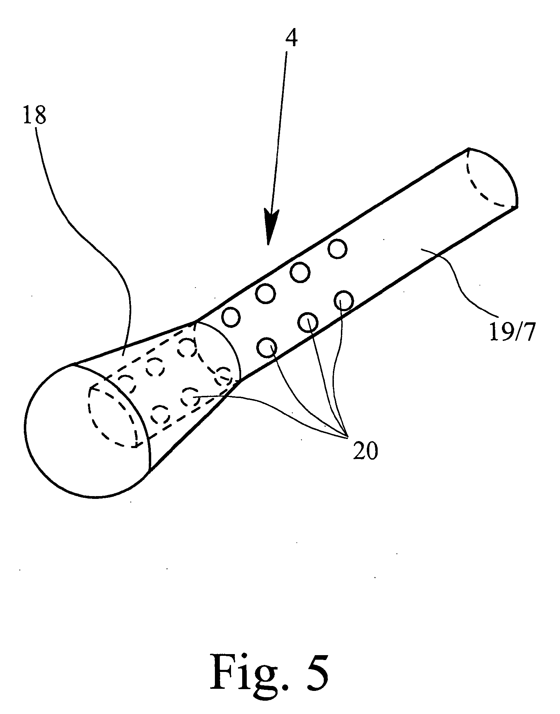

Nachfolgend wird eine zweite Ausführungsform der vorschlagsgemäßen Probennahmeeinrichtung 1 und des vorschlagsgemäßen Systems zur Untersuchung von Probenflüssigkeit 2 anhand von Fig. 4 bis 6 erläutert, wobei jedoch nur wesentliche Unterschiede gegenüber der ersten Ausführungsform herausgestellt werden. Die Ausführungen zur ersten Ausführungsform gelten also ansonsten entsprechend.

Das vorschlagsgemäße System 10 gemäß der zweiten Ausführungsform ist in Fig. 4 schematisch dargestellt. Im Gegensatz zur ersten Ausführungsform ist die Aufnahmekammer 11 der Untersuchungseinrichtung 3 nicht durch eine zusätzliche Seitenwand begrenzt bzw. gebildet, sondern unmittelbar von einem Gehäuseunterteil der Untersuchungseinrichtung 3 gebildet.

Weiter ist der Aufnahmekammer 11 beim Darstellungsbeispiel mit einer Abdeckung bzw. Schwallwand 16 versehen, die vorzugsweise eine Durchbrechung 17 aufweist, durch die die Probennahmeeinrichtung 1, insbesondere deren Aufnahmeeinrichtung 4, in die Aufnahmekammer 11 einführbar ist. So kann sichergestellt werden, daß beim Auswaschen der Probenflüssigkeit 2 aus der Aufnahmeeinrichtung 4 durch die Verdünnungsflüssigkeit 6 keine der Flüssigkeiten 2, 6 unmittelbar zur Analyseeinrichtung 12 gelangt bzw. auf diese gespritzt wird, sondern daß sich zunächst erst die Aufnahmekammer 11 füllen muß, wodurch zunächst die gewünschte Verdünnung und ggf. ein weitgehendes Lösen, Vermischen und/oder Reagieren der Probenflüssigkeit 2 mit der Verdünnungsflüssigkeit 6 erreicht wird.

Erst nach dem Füllen der Aufnahmekammer 11 kann die verdünnte Probenflüssigkeit 2 durch die Durchbrechung 17 oder durch eine separate, nicht dargestellte Durchbrechung durch die Schwallwand 16 hindurchtreten bzw. diese überwinden und zur Analyseeinrichtung 12 für die anschließende Untersuchung gelangen.

Wie bei der ersten Ausführungsform läuft die Untersuchung vorzugsweise wiederum selbsttätig ab. Insbesondere ist auch wie bei der ersten Ausführungsform kein Schütteln oder kein separater Schritt zum Vermischen bzw. Verdünnen der Probenflüssigkeit 2 mit der Verdünnungsflüssigkeit 6 erforderlich. Vielmehr genügt es - insbesondere mittels der Pumpeinrichtung 9 - die Probenflüssigkeit 2 und die Verdünnungsflüssigkeit 6 aus der Probennahmeeinrichtung 1 an die Untersuchungseinrichtung 3 bzw. in deren Aufnahmekammer 11 abzugeben.

Bei der zweiten Ausführungsform ist die Probennahmeeinrichtung 1 insbesondere zur Aufnahme von Speichel oder einer sonstigen Flüssigkeit eines menschlichen oder tierischen Körpers, wie Urin, als Probenflüssigkeit 2 ausgebildet. Insbesondere weist die Aufnahmeeinrichtung 4 hierzu einen Aufnahmekörper 18 für die Probenflüssigkeit 2 auf.

Der Aufnahmekörper 18 ist vorzugsweise porös, saugend, vliesartig, watteartig und/oder schwammartig ausgebildet und an einem hohlen und/oder perforierten Halteelement 19 angebracht, das insbesondere durch eine einseitig geschlossene, vorzugsweise aus Kunststoff bestehende Kapillare 7 mit entsprechenden seitlichen Öffnungen 20 zur Perforierung gebildet ist. Insbesondere umgibt der Aufnahmekörper 18 das Halteelement 19 zumindest in einem Endbereich.

Die Kapillare 7 kann bedarfsweise auch beidseitig geöffnet sein. Ebenso erhöht die Verwendung vieler Durchtrittsöffnungen 20 die Effizienz beim Auswaschen bzw. Austragen von Probenflüssigkeit 2 aus dem Aufnahmekörper 18 durch die Verdünnungsflüssigkeit 6.

Der Aufnahmekörper 18 mit seinem vorzugsweise saugenden Material dient der eigentlichen Aufnahme von Probenflüssigkeit 2, insbesondere Speichel, Schweiß, Tränenflüssigkeit oder dergleichen.

Alternativ oder zusätzlich kann jedoch auch Probenflüssigkeit 2 von dem beim Darstellungsbeispiel hohlen Halteelement 19 aufgenommen werden.

Durch Herunterdrücken des Kolbens 9 wird die Verdünnungsflüssigkeit 6 durch das Halteelement 19 und die Durchtrittsöffnungen 20 in den Aufnahmekörper 18 gedrückt, wodurch dieser bzw. die darin befindliche Probenflüssigkeit 2 zur Überführung in die Untersuchungseinrichtung 3 ausgewaschen wird.

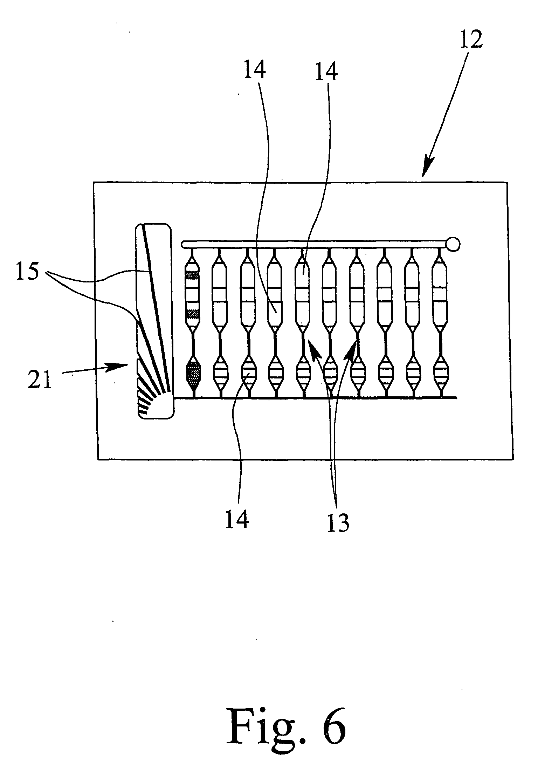

Fig. 6 zeigt in einer schematischen Darstellung einen bevorzugten Aufbau der Analyseeinrichtung 12 gemäß der zweiten Ausführungsform. Gegenüber der ersten Ausführungsform weist die Analyseeinrichtung 12 vorzugsweise mehr Reaktionskammern und Detektions- bzw. Untersuchungskammem 14 auf. Zusätzlich weist die Analyseeinrichtung 12 einen vergrößerten, insbesondere verbreiterten Aufnahmebereich 21 mit einer Vielzahl von (kapillaren) Kanälen 15 auf, um die verdünnte Probenflüssigkeit 2 schneller und/oder in größerer Menge aufnehmen zu können.

Gemäß einer bevorzugten Variante ist die Analyseeinrichtung 12 zur Untersuchung von Speichel, insbesondere Bestimmung von Alkohol, HIV, Medikamenten oder Drogen im Speichel, ausgebildet.

Gemäß einer weiteren Ausführungsvariante ist die Analyseeinrichtung 12 zusätzlich oder alternativ zur Untersuchung von Urin, insbesondere zur Bestimmung von Microalbumin und/oder Creatin, ausgebildet.

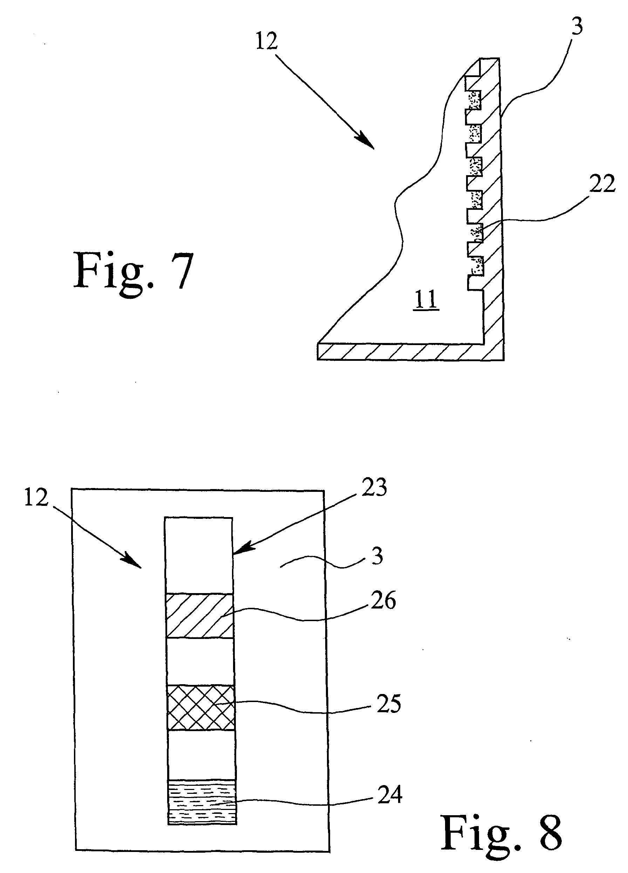

Fig. 7 zeigt in einer sehr schematischen, ausschnittsweisen Schnittdarstellung die Analyseeinrichtung 12 gemäß einer dritten Ausführungsform. Hier ist eine innere Wandung der Untersuchungseinrichtung 3 bzw. der Aufnahmekammer 11 mit einem Reagenz 22 der Analyseeinrichtung 12 versehen, das nach Zugabe der verdünnten Probenflüssigkeit 2 von dieser angelöst wird und mit dieser für die Untersuchung bzw. Diagnostik reagieren kann. Beispielsweise ist das Reagenz 22 direkt auf der inneren Wandung eingetrocknet oder in sonstiger Weise angebracht.

Beim Darstellungsbeispiel ist die Innenwandung - zumindest bereichsweise - vorzugsweise mit einer bestimmten Oberflächentextur versehen und/oder mikrostrukturiert, um die Benetzbarkeit zu erhöhen und/oder das Reagenz 22 aufzunehmen, wie in Fig. 7 angedeutet. Insbesondere ist das Reagenz 22 in dieser Mikrostruktur eingetrocknet.

Wenn die Probenflüssigkeit 2 beim Einfüllen in die Aufnahmekammer 11 durch die weitere Zugabe der Verdünnungsflüssigkeit 6 die Höhe der Analyseeinrichtung 12 erreicht und diese benetzt, kann das Reagenz 22 angelöst werden und die gewünschte Reaktion, Untersuchung oder dergleichen erfolgen.

Fig. 8 zeigt eine vierte Ausführungsform der Analyseeinrichtung 12, die einen Teststreifen 23 mit eingetrockneten und/oder immobilisierten Reagenzien - beim Darstellungsbeispiel drei Bereiche 24, 25, 26 mit unterschiedlichen Reagenzien - aufweist.

Nach Erreichen eines bestimmten Füllstandes in der Aufnahmekammer 11 wird der untere Teil des Teststreifens 23 von der verdünnten Probenflüssigkeit 2 benetzt, die dann aufgrund von Kapillarkräften durch den Teststreifen 23 transportiert wird und dort mit den Reagenzien reagiert. Insbesondere erfolgt dabei ein Farbumschlag, je nach Reaktion mit den Reagenzien.

Der Teststreifen 23 kann beispielsweise wie bei der Urinanalyse üblich mehrere Testfelder bzw. Bereiche 24, 25, 26 für unterschiedliche zu untersuchende Parameter aufweisen.

Bedarfsweise können in der Aufnahmekammer 11 eine Vielzahl von, gegebenenfalls auch unterschiedlichen Teststreifen 23 eingesetzt werden.

Gemäß einer besonders bevorzugten Ausführungsvariante ist die Analyseeinrichtung 12 bzw. der Teststreifen 23 auswechselbar und/oder bedarfsgerecht in die Untersuchungseinrichtung 3 einsetzbar. Dies ermöglicht einen besonders universellen Einsatz der Untersuchungseinrichtung 3 und damit des vorschlagsgemäßen Systems 10.

Vorzugsweise weist die Untersuchungseinrichtung 3 bzw. die Wandung der Aufnahmekammer 11 geeignete, nicht dargestellte Haltemittel zur gegebenenfalls lösbaren oder auswechselbaren Aufnahme der Analyseeinrichtung 12, insbesondere des Teststreifens 23, auf. Beispielsweise kann der Teststreifen 23 in eine entsprechende Führung, Nut oder dergleichen eingeschoben werden.

Bedarfsweise kann der Teststreifen 23 für die sogenannte Immunchromatographie ausgebildet sein und ein sogenanntes Sandwhich-Immuno-Array bilden. Insbesondere weist der Teststreifen 23 dann einen Blut-Separations-Abschnitt, einen insbesondere ein Antikörper-Latex-Konjugat absorbierenden Bereich, eine Nitrozellulose-Membran mit einem Testband und einem Kontrollband und/oder einen nachgeordneten absorbierenden Bereich auf. Diese Ausführungsvariante ist jedoch nicht dargestellt.

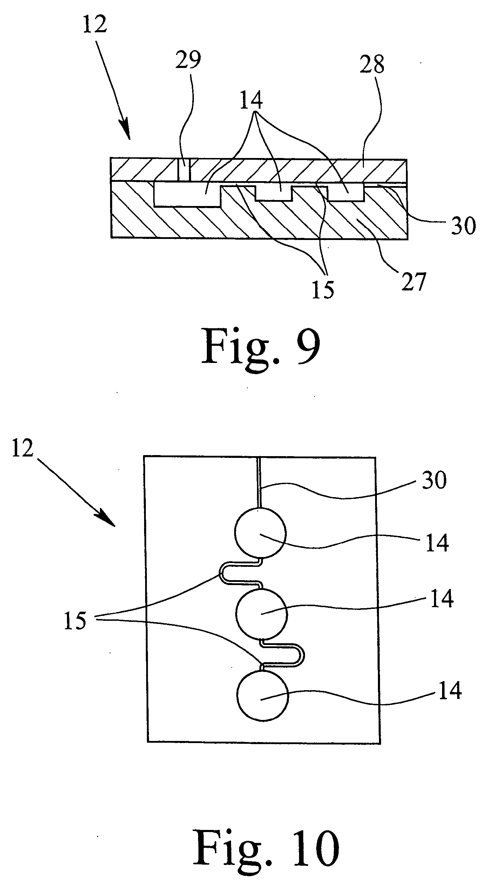

Fig. 9 zeigt in einer schematischen Schnittdarstellung die Analyseeinrichtung 12 gemäß einer fünften Ausführungsform. Fig. 10 zeigt eine Draufsicht der Analyseeinrichtung 12.

In einer Platte 27 sind Kavitäten zur Aufnahme der verdünnten Probenflüssigkeit 2 gebildet. Die Kavitäten, wie Kammern 14 und Kanäle 15, sind insbesondere ausgehend von einer Flachseite der Platte 27 gebildet und von einer vorzugsweise folienartigen Abdeckung 28 überdeckt. Dementsprechend bilden die Kavitäten ein quasi geschlossenes Kapillarsystem.

Beim Darstellungsbeispiel weist die Analyseeinrichtung 12 eine insbesondere in der Abdeckung 28 gebildete Aufnahmeöffnung 29 zur Aufnahme der verdünnten Probenflüssigkeit 2 auf, und zwar vorzugsweise dann wenn die verdünnte Probenflüssigkeit 2 aufgrund einer entsprechenden Füllhöhe in der Aufnahmekammer 11 der Untersuchungseinrichtung 3 die Aufnahmeöffnung 29 erreicht.

Die verdünnte Probenflüssigkeit 2 kann dann in die erste Kammer 14 einströmen und wird - insbesondere aufgrund entsprechender Ausbildung der Kammern 14, Kanäle 15 und dazwischenliegenden Übergänge - durch Kapillarkräfte durch das Kapillarsystem transportiert, um insbesondere die weiteren Kammern 14 zu füllen und dort mit zuvor eingebrachten, gegebenenfalls eingetrockneten Reagenzien zu reagieren, um die gewünschte Diagnostik bzw. Untersuchung zu ermöglichen.

Die Analyseeinrichtung 12 weist eine Entlüftungsöffnung 30 auf, so daß beim Füllen des Kapillarsystems die von der eindringenden Probenflüssigkeit 2 verdrängte Luft aus dem Kapillarsystem entweichen kann.

Vorzugsweise ist die Analyseeinrichtung 12 wiederum zumindest bereichsweise ausreichend transparent ausgebildet, um insbesondere eine optische Detektion bzw. Untersuchung zu ermöglichen.

Die Platte 27 ist vorzugsweise mikrostrukturiert und kann beispielsweise aus Kunststoff, Glas, Keramik, Silizium, Silikon o. dgl. hergestellt sein. Jedoch kann es sich bedarfsweise auch um eine Folie oder einen sonstigen geeigneten Träger handeln. Entsprechendes gilt auch für die Abdeckung 28. Bedarfsweise kann die Abdeckung 28 die Platte 27 auch nur teilweise überdecken.

Die vorschlagsgemäße Probennahmeeinrichtung 1 gemäß den beschriebenen Ausführungsformen ist vorzugsweise tragbar ausgebildet. Die Untersuchungseinrichtung 3 ist vorzugsweise ebenfalls tragbar ausgebildet. Dementsprechend ergibt sich ein mobiles, insbesondere tragbares System 10 zur Untersuchung von Probenflüssigkeit 2.

Die vorschlagsgemäße Probennahmeeinrichtung 1 und das vorschlagsgemäße System 10 sind sehr universell einsetzbar. Bei vielen immunologischen oder biochemischen Tests im Point of Care oder Selftestingsegment ist es erforderlich, die Probenflüssigkeit 2 stark zu verdünnen. Die Verdünnung muß dabei sehr homogen und quantitativ bestimmt sein. Insbesondere bei der Verwendung von Blutproben, ist es das Ziel, möglichst kleine Probenvolumina zu verwenden. Angestrebt werden Volumina in einem Bereich zwischen 1 µl und 5 µl. Die Verdünnungsfaktoren liegen typischerweise bei 1:50 bis 1:300. Hierfür sind die vorschlagsgemäße Probennahmeeinrichtung 1 und das vorschlagsgemäße System 10 ideal geeignet.

Die Probenflüssigkeit 2 kann einfach, schnell und vor allem hygienisch entnommen werden. Die Dosierung wird bereits bei diesem Aufnahme- bzw. Entnahmeschritt sichergestellt.

Die entnommene Probenflüssigkeit 2 wird dann in einem Schritt in die Untersuchungseinrichtung 3 eingebracht, wo die weitere Prozessierung bzw. Analyse oder Untersuchung gestartet werden kann. Bei diesem Einbringen der Probenflüssigkeit 2 erfolgt die gewünschte Verdünnung. Zwischenschritte zur Probenvorbereitung außerhalb des vorschlagsgemäßen Systems 10 sind nicht erforderlich. Insbesondere kann die Probenentnahme und die Durchführung der Analyse bzw. von Tests von medizinisch nicht geschulten Personen durchgeführt werden.

Ein besonderer Vorteil der vorschlagsgemäßen Lösung liegt darin, daß die Probennahmeeinrichtung 1 sowohl die Entnahme von Probenflüssigkeit 2 als auch die Lagerung und damit Bereitstellung der Verdünnungsflüssigkeit 6, insbesondere eines Verdünnungspuffers o. dgl., in einem Gerät vereint.

## Patentansprüche

1. Probennahmeeinrichtung (1) zur Aufnahme von Probenflüssigkeit (2), insbesondere Blut, Speichel oder einer sonstigen Flüssigkeit eines menschlichen oder tierischen Körpers, und Abgabe, insbesondere an eine Untersuchungseinrichtung (3),
mit einer Aufnahmeeinrichtung (4) für die Probenflüssigkeit (2),
**dadurch gekennzeichnet,**
**daß** die Probennahmeeinrichtung (1) ein vorzugsweise integriertes Reservoir (5) für eine Verdünnungsflüssigkeit (6) aufweist und tragbar ausgebildet ist und
**daß** die Probenflüssigkeit (2) und die Verdünnungsflüssigkeit (6) mittels einer manuell betätigbaren Pumpeinrichtung (9) nacheinander oder gleichzeitig abgebbar sind.

2. Probennahmeeinrichtung nach Anspruch 1, **dadurch gekennzeichnet, daß** die Probennahmeeinrichtung (1) derart ausgebildet ist, daß die Verdünnungsflüssigkeit (6) auslaufsicher im Reservoir (5) aufnehmbar und/oder in der Probennahmeeinrichtung (1) lagerbar ist und/oder daß die Probenflüssigkeit (2) und die Verdünnungsflüssigkeit (6) durch eine einzige Betätigung der Probennahmeeinrichtung (1) abgebbar sind.

3. Probennahmeeinrichtung nach Anspruch 1 oder 2, **dadurch gekennzeichnet, daß** die Aufnahmeeinrichtung (4) unabhängig vom Reservoir (5) mit der Probenflüssigkeit (2) befüllbar ist.

4. Probennahmeeinrichtung nach einem der voranstehenden Ansprüche, **dadurch gekennzeichnet, daß** die Aufnahmeeinrichtung (4) selbsttätig, insbesondere saugend, mit der Probenflüssigkeit (2) befüllbar ist.

5. Probennahmeeinrichtung nach einem der voranstehenden Ansprüche, **dadurch gekennzeichnet, daß** die Aufnahmeeinrichtung (4) eine Kapillare (7) für die Probenflüssigkeit (2) aufweist.

6. Probennahmeeinrichtung nach Anspruch 5, **dadurch gekennzeichnet, daß** die Kapillare (7) eine Entlüftungsöffnung (8) aufweist, vorzugsweise wobei der Querschnitt der Entlüftungsöffnung (8) geringer als der Querschnitt der Kapillare (7) ist und/oder die Entlüftungsöffnung (8) seitlich von der Kapillare (7) abzweigt.

7. Probennahmeeinrichtung nach einem der voranstehenden Ansprüche, **dadurch gekennzeichnet, daß** die Aufnahmeeinrichtung (4) einen Aufnahmekörper (18) für die Probenflüssigkeit (2) aufweist.

8. Probennahmeeinrichtung nach Anspruch 7, **dadurch gekennzeichnet, daß** der Aufnahmekörper (18) porös, saugend, vliesartig, watteartig und/oder schwammartig ausgebildet ist.

9. Probennahmeeinrichtung nach Anspruch 7 oder 8, **dadurch gekennzeichnet, daß** der Aufnahmekörper (18) an einem hohlen und/oder perforierten Halteelement (19) angebracht ist.

10. Probennahmeeinrichtung nach einem der voranstehenden Ansprüche, **dadurch gekennzeichnet, daß** die Probennahmeeinrichtung (1) derart ausgebildet ist, daß die Probenflüssigkeit (2) mit der oder durch die Verdünnungsflüssigkeit (6) aus der Aufnahmeeinrichtung (4) austragbar ist.

11. Probennahmeeinrichtung nach Anspruch 10, **dadurch gekennzeichnet, daß** die Aufnahmeeinrichtung (4) mittels der Verdünnungsflüssigkeit (6) zur Abgabe der Probenflüssigkeit (2) und der Verdünnungsflüssigkeit (6) spülbar ist.

12. Probennahmeeinrichtung nach einem der voranstehenden Ansprüche, **dadurch gekennzeichnet, daß** die Probennahmeeinrichtung (1) derart ausgebildet ist, daß die Probenflüssigkeit (2) mit der Verdünnungsflüssigkeit (6) in der Probennahmeeinrichtung (1) oder, vorzugsweise, erst bei bzw. nach der Abgabe mischbar ist.

13. Probennahmeeinrichtung nach einem der voranstehenden Ansprüche, **dadurch gekennzeichnet, daß** die Pumpeinrichtung (9) einen niederdrückbaren Kolben aufweist.

14. Probennahmeeinrichtung nach einem der voranstehenden Ansprüche, **dadurch gekennzeichnet, daß** das Aufnahmevolumen des Reservoir (5) mindestens um den Faktor 10, vorzugsweise 100, insbesondere 1000, größer als das Aufnahmevolumen der Aufnahmeeinrichtung (4) ist.

15. System (10) zur Untersuchung von Probenflüssigkeit (2), insbesondere Blut, Speichel oder einer sonstigen Flüssigkeit eines menschlichen oder tierischen Körpers, mit einer Probennahmeeinrichtung (1) zur Aufnahme und Abgabe von Probenflüssigkeit (2) und mit einer Untersuchungseinrichtung (3),
**dadurch gekennzeichnet,**
**daß** die Probennahmeeinrichtung (1) gemäß einem der voranstehenden Ansprüche ausgebildet ist.

16. System nach Anspruch 15, **dadurch gekennzeichnet, daß** die Untersuchungseinrichtung (3) eine Aufnahmekammer (11) zur Aufnahme und insbesondere zum Mischen oder Verdünnen der Probenflüssigkeit (2) mit der Verdünnungsflüssigkeit (6) aufweist.

17. System nach Anspruch 15 oder 16, **dadurch gekennzeichnet, daß** die Untersuchungseinrichtung (13) eine Analyseeinrichtung (12), insbesondere zur mikrofluidischen Diagnostik, aufweist.

18. System nach den Ansprüchen 16 und 17, **dadurch gekennzeichnet, daß** die Untersuchungseinrichtung (3) derart ausgebildet ist, daß erst bei oder nach Erreichen einer bestimmten Füllmenge, insbesondere Füllhöhe, in der Aufnahmekammer (11) an Probenflüssigkeit (2) und Verdünnungsflüssigkeit (6) eine Analyse durchführbar ist, insbesondere erst dann der Analyseeinrichtung (12) verdünnte Probenflüssigkeit (2) zuführbar ist.

19. System nach Anspruch 17 oder 18, **dadurch gekennzeichnet, daß** der Analyseeinrichtung (12) verdünnte Probenflüssigkeit (2) selbsttätig, insbesondere durch Kapillarkräfte, zuführbar ist.

20. System nach einem der Ansprüche 17 bis 19, **dadurch gekennzeichnet, daß** die Analyseeinrichtung (12) eine Mikrotiterplatte, einen Analysechip und/oder einen Teststeifen (23) aufweist.

21. System nach Anspruch 20, **dadurch gekennzeichnet, daß** die Analyseeinrichtung (12), insbesondere der Teststreifen (23), auswechselbar ist.

22. System nach einem der Ansprüche 17 bis 21, **dadurch gekennzeichnet, daß** die Analyseeinrichtung (12) ein unmittelbar auf einer Wandung einer Aufnahmekammer (11) angeordnetes, vorzugsweise eingetrocknetes Reagenz (22) zur Reaktion mit Bestandteilen der Probenflüssigkeit (2) aufweist.

23. System nach einem der Ansprüche 17 bis 22 und ggf. einem oder mehreren der folgenden Ansprüche, **dadurch gekennzeichnet, daß** die Analyseeinrichtung (12) aus ausreichend transparentem Material hergestellt oder zumindest bereichsweise transparent ausgebildet ist.

24. System nach einem der Ansprüche 17 bis 23, **dadurch gekennzeichnet, daß** die Analyseeinrichtung (12) zur Untersuchung von Blut bzw. Bestimmung eines Blutwerts, insbesondere des HbA1c-Werts, ausgebildet ist, insbesondere wobei die Verdünnungsflüssigkeit (6) eine Lysereagenz zur Lyse von Blutzellen enthält.

25. System nach einem der Ansprüche 17 bis 23, **dadurch gekennzeichnet, daß** die Analyseeinrichtung (12) zur Untersuchung von Speichel, insbesondere Bestimmung von Alkohol, HIV, Medikamenten oder Drogen im Speichel, ausgebildet ist.

26. System nach einem der Ansprüche 17 bis 23, **dadurch gekennzeichnet, daß** die Analyseeinrichtung (12) zur Untersuchung von Urin, insbesondere Bestimmung von Microalbumin und/oder Creatin, ausgebildet ist.

27. System nach einem der Ansprüche 15 bis 26, **dadurch gekennzeichnet, daß** die Probennahmeeinrichtung (1) und/oder die Untersuchungseinrichtung (3) nicht-elektrisch arbeitet bzw. arbeiten.

28. System nach einem der Ansprüche 15 bis 27, **dadurch gekennzeichnet, daß** das System (10) mobil, insbesondere tragbar, ausgebildet ist.

29. System nach einem der Ansprüche 15 bis 28, **dadurch gekennzeichnet, daß** die Untersuchungseinrichtung (3) eine an die Probennahmeeinrichtung (1) angepaßte Ausnehmung bzw. Öffnung aufweist und daß die eingesetzte Probennahmeeinrichtung (1) die Ausnehmung bzw. Öffnung der Untersuchungseinrichtung (3) im wesentlichen schließt.
